# EUROPÄISCHE PATENTSCHRIFT

(11) **EP 0 268 869 B1**
(45) Veröffentlichungstag und Bekanntmachung des Hinweises auf die Patenterteilung: **09.03.1994**
(21) Anmeldenummer: 87116001.6
(22) Anmeldetag: 30.10.1987
(51) Int. Cl.: H02G 3/04

(54) **Kunststoff-Schutzrohranordnung für Leitungen**
Synthetic protective tubing device for conduits
Dispositif à tuyau protecteur en matériau synthétique pour conduites

(30) Priorität: 25.11.1986 DE 3640226
(43) Veröffentlichungstag der Anmeldung: 01.06.1988
(73) Patentinhaber: FRÄNKISCHE ROHRWERKE, GEBR. KIRCHNER GmbH & Co., D-97486 Königsberg (DE)
(72) Erfinder: Braun, Franz-Josef, 8729 Koenigsberg i. Bay. (DE)
(74) Vertreter: Schwabe - Sandmair - Marx

(56) Entgegenhaltungen:
- DE-A- 2 304 852
- DE-A- 3 405 552
- FR-A- 679 044
- FR-A- 2 355 387
- FR-A- 2 489 613

## Beschreibung

Die Erfindung betrifft eine Schutzrohranordnung für Leitungen gemäß dem Oberbegriff des Anspruchs 1.

Eine solche Anordnung ist durch die DE-OS 34 05 552 bekannt und weist ein gewelltes, flexibles Kunststoffrohr auf, das längsgeschlitzt ist. Im Bereich des Längsschlitzes überlappen einander die Rohrwände und sind durch komplementäre verrastbare Ausbildungen durckknopfartig miteinander verschließbar. Ein Kabelbaum kann in ein solches Rohr durch den aufgebogenen Längsschlitz eingelegt werden; hiernach wird der Längsschlitz verschlossen und der Kabelbaum ist durch das Rohr vor mechanischen und chemischen Einflüssen geschützt.

Beim Verlegen um enge Krümmungen herum kann jedoch bei ungünstiger Lage des verschlossenen Längsschlitzes dieser wieder aufspringen; ferner ist es möglich, daß beim Einführen des Kabelbaumes durch den engen Längsschlitz dieser Kabelbaum an den scharfen Längskanten beschädigt werden kann.

Außerdem ist die Wandstärke eines solchen Kunststoffrohres herstellungsbedingt verhältnismäßig gering; es ist daher möglich, daß das bekannte Kunststoffrohr durch vorspringende Kanten oder dergleichen eingedrückt werden kann.

Der eingangs genannte Nachteil kann zwar durch eine Längsteilung des Rohres in zwei Halbrohre vermieden werden, wie dies durch die DE-OS 23 04 852 bekannt ist, doch diese letztgenannte bekannte Anordnung hat den Nachteil, daß der Kabelbaum nach dem Einlegen in eine der Rohrhälften nicht in dieser hält, sondern zusätzlich fixiert werden muß, bevor die andere Rohrhälfte angebracht ist.

Wenn an einem Kabelbaum mehrere Rohrabschnitte angebracht werden sollen, die hintereinander liegen, so ist eine spezielle Verbindungsmuffe erforderlich, um zu vermeiden, daß die Kabel an der Stoßstelle zwischen den beiden Rohren von diesen durchgescheuert werden.

Ein Vorteil der bekannten Rohranordnung liegt dagegen darin, daß sie eine im wesentlichen kreiszylindrische Außenkontur aufweist, so daß handelsübliche Anschlußarmaturen, Verbindungsmuffen und dergleichen verwendet werden können.

Ein weiterer Vorteil der bekannten Anordnung liegt darin, daß am Rohr überstehende, aufschneidbare Warzen angeordnet sind, in welche Abzweigungen des Kabelbaumes eingelegt werden können, die somit nicht durch den Längsschlitz hindurchgeführt werden müssen. Diese Abzweigungsstellen müssen jedoch stets mit Isolierband oder dergleichen abgedichtet werden, um zu vermeiden, daß Wasser oder sonstige Flüssigkeiten in das Innere der Rohranordnung gelangen.

Aus dem gattungsgemäßen Stand der Technik, der FR-A-679 044, ist eine Schutzrohranordnung mit den im Oberbegriff des Patentanspruchs 1 aufgeführten Merkmalen bekannt. Diese besteht aus zwei längsgeschlitzten Rohren, die ineinandergeschoben werden können. Das eine Rohr deckt dabei den Schlitz des anderen Rohres ab. Die beiden Rohre sind in Umfangsrichtung federnd, so daß sie, nachdem sie ineinandergesteckt worden sind, eine relativ starre Schutzrohranordnung bilden. An den Enden der Schutzrohranordnung kann diese mittels eines Verschlusses abgedichtet werden.

Die bekannte Schutzrohranordnung hat den Nachteil, daß diese insbesondere in zusammengestecktem Zustand äußerst starr ist und sich für die Verwendung in Fahrzeugen in keinem Falle eignet, da Schutzrohranordnungen in Fahrzeugen den Formen der Karrosserie folgen können müssen. Zudem würde die bekannte Schutzrohranordnung, deren rohrförmige Bestandteile glattwandig sind, bei den in den Fahrzeugen auftretenden Vibrationen verdrehen, was auch die Abschlußstopfen der bekannten Schutzrohranordnung nicht verhindern können, da diese lediglich die Form des freibleibenden, leicht pilzförmigen Raumes zwischen den beiden U-förmigen Rohrteilen der Schutzrohranordnung ausfüllt. Folglich ist die gattungsgemäße Schutzrohranordnung keinesfalls für eine Anwendung in Fahrzeugen geeignet.

Es ist die Aufgabe der vorliegenden Erfindung, eine Schutzrohranordnung vorzuschlagen, die die oben aufgeführten Nachteile des Standes der Technik nicht aufweist; insbesondere soll eine Schutzrohranordnung vorgeschlagen werden, die sich für die Anwendung in Fahrzeugen eignet, wobei auch an scharfen Knickstellen gewährleistet ist, daß die Schutzrohranordnung auch unter den Vibrationen des Fahrzeugs geschlossen bleibt.

Diese Aufgabe wird durch eine Schutzrohranordnung gemäß dem Patentanspruch 1 bzw. einem Bausatz aus zugeschnittenen Längenabschnitten gemäß Patentanspruch 11 gelöst.

Zweckmäßige Ausgestaltungen der erfindungsgemäßen Schutzrohranordnung gehen aus den Unteransprüchen hervor.

Die erfindungsgemäße Schutzrohranordnung hat den Vorteil, daß die Zusammensetzung von Längsabschnitten ohne zusätzliche Verbindungsmuffen möglich ist. Ferner weist sie den Vorteil auf, daß gegebenenfalls Rohrabzweigungen an beliebigen Stellen, also auch dort, wo nicht bereits vorher entsprechende Ausbildungen angeformt waren, möglich sind. Zudem ist die Festigkeit der erfindungsgemäßen Rohranordnung und deren Beständigkeit gegenüber dem Eindrücken, Einknicken usw. erhöht, ohne daß die eigentliche Wandstärke erhöht wird.

Der erfindungsgemäße Bausatz für die Kunststoff-Schutzrohranordnung eines Kraftfahrzeuges kann nicht nur an einen vorhandenen Kabelbaum angepaßt werden, sondern ist zusätzlich an die unterschiedlichsten Zusatzleitungen anpaßbar.

Das Innere dieser beiden Kunststoffrohre kann einen verhältnismäßig breiten Schlitz auf weisen, dessen Längskanten sich jedenfalls nicht berühren oder gar einander überlappen. Das Einlegen auch eines dicken Kabelbaumes oder von Hydraulik- und Druckluftleitungen, Unterdruckschläuchen und dergleichen mehr in dieses innere Rohr ist ohne weiteres ohne die Gefahr möglich, daß diese Leitungen während des Einlegens beschädigt werden.

Hierbei kann die Schlitzbreite so bemessen werden, daß die einmal in das Innenrohr eingelegten Leitungen auch von selbst während der Montage im Innenrohr halten, so daß es nicht notwendig ist, während der Montage diese Leitungen zusätzlich zu fixieren. Hierbei ist die Schlitzbreite des Innenrohres grundsätzlich so bemessen, daß die Leitungen in dieses eingelegt werden können, ohne daß der Schlitz überhaupt oder in nennenswertem Maße auseinandergebogen zu werden braucht. Dennoch ist die Halterung der Leitungen im Innenrohr ausreichend.

Über das Innenrohr wird ein Außenrohr aufgeklemmt, das seinerseits längsgeschlitzt ist.

Dieses Außenrohr deckt den Schlitz im Innenrohr ab, wobei die Innenoberfläche der so gebildeten Schutzrohranordnung keinen so weit nach innen weisenden Vorsprung aufweist, daß dieser eine Scheuerstelle bilden könnte.

Innen- und Außenrohr können als Meterware geliefert werden und in die gewünschten Längen zugeschnitten werden, können aber auch als kürzere Abschnitte geliefert werden, die zu größeren Längenabschnitten gestückelt werden können: wenn zwei Innenrohre der Länge nach aneinanderstoßen, dann genügt es, über die Stoßstelle einen durchgehenden Abschnitt eines Außenrohres aufzuklemmen, um eine hohen Beanspruchungen gewachsene Verbindung zwischen den beiden Innenrohren zus schaffen. Gleiches gilt auch für zwei aneinanderstoßende Längenabschnitte von Außenrohren, die auf ein durchgehendes Innenrohr aufgeklemmt werden.

Während bei Serienfahrzeugen die Schutzrohranordnungen für die Kabelbäume und dergleichen in der Regel als vorgefertigte Bausätze geliefert werden, müssen die Schutzrohranordnungen bei Sonderanfertigungen, z.B. LKW-Aufbauten, Omnibussen, Kommunalfahrzeugen und dergleichen zugeschnitten werden. Hier ist es besonders von Vorteil, daß sich an die erfindungsgemäße Schutzrohranordnung mühelos weitere Abschnitte anstückeln lassen.

Auch die Durchführung von Abzweigungen ist ohne weiteres dadurch möglich, daß man zwischen den aneinander angrenzenden Enden zweier Außenrohre einen Abstand freiläßt, der vorzugsweise einem ganzen Vielfachen der Wellenteilung entspricht. Auf diese Weise wird eine Durchführungsöffnung geschaffen, durch welche die Abzweigung des Kabelbaumes hindurchtritt. Bei der Montage wird der Kabelbaum einfach in das Innenrohr eingelegt, wobei die Abzweigungen durch dessen Längsschlitz nach außen herausstehen. Anschließend werden entsprechend zugeschnittene Längsabschnitte des Außenrohres auf das Innenrohr aufgeklemmt. Hierbei ist die Lage einer Abzweigung nicht auf bestimmte, vorgefertigte Ausbildungen beschränkt. Die Abzweigungsstelle muß lediglich, wie bisher auch üblich, mit Isolierband oder dergleichen abgedichtet werden.

Es ist auch möglich, an einer Abzweigungsstelle in das Innen-und/oder Außenrohr eine vorzugsweise von einem Rand des jeweiligen Längsschlitzes ausgehende Aussparung einzubringen.

Diese Aussparung kann sich beim Außen- oder Innenrohr jeweils bis zu jenem Bereich erstrecken, der dem Längsschlitz des Innen- bzw. Außenrohres gegenüberliegt. Es ist auch möglich, an Außen- und Innenrohr einander gegenüberliegend jeweils eine Aussparung einzubringen, welche sich dann nur so weit erstrecken muß, daß beide übereinanderliegenden Aussparungen genügend Raum zum Durchtritt der Abzweigung freilassen.

Auch wenn die Schutzrohranordnung als fertiger Bausatz für ein Serienfahrzeug vorliegt und an einer im Bausatz nicht vorgesehenen Stelle wegen eines speziellen Kraftfahrzeugzubehörs eine Zweigleitung eingebracht werden soll, ist die Anbringung einer Abzweigung ohne weiteres möglich, indem man das zugehörige Außenrohr in zwei Einzelabschnitte unter Heraustrennen eines kurzen Teiles auftrennt oder die oben erwähnte Aussparung in Außen- und/oder Innenrohr ausstanzt, ausschneidet oder sonstwie heraustrennt. Hierzu bedarf es weder eines Spezialwerkzeugs noch besonderer Fertigkeit.

Die Rippen bzw. Wellungen des Außen- und Innenrohres dienen grundsätzlich der besseren Flexibilität der Rohranordnung und sind dort, wo diese Flexibilität nicht erforderlich ist und die Rohranordnung nur geradlinig verlegt wird, verzichtbar. Hierbei ist es grundsätzlich möglich, Außen- und Innenrohr mit gleicher oder unterschiedlicher Wellung zu versehen.

Gemäß der Erfindung ist es aber besonders von Vorteil, daß die Rippen des Innenrohres in den Wellungen des Außenrohres liegen; Innen- und Außenrohr weisen somit, was ihre Rippen bzw. Wellungen angeht, die gleiche Teilung auf, die Breite der Rippen des Innenrohres ist aber geringer als jene des Außenrohres, und zwar so, daß diese Rohre komplementär aufeinander aufgeklemmt werden können. Der besondere Vorteil dieser Ausgestaltung liegt nicht nur darin, daß eine besonders gute Abdichtung geschaffen ist, sondern auch darin, daß sich Außen- und Innenrohr nicht in Längsrichtung zueinander verschieben können, was während der Montage der Schutzrohranordnung an Biegungen und Knickstellen sonst grundsätzlich möglich wäre. Es besteht somit auch nicht die Gefahr, daß bei durch Aussparungen herausgeführten Zweigleitungen diese durch die Längsverschiebung von Außen- und Innenrohr ein- oder abgeklemmt werden können.

Gemäß einer weiteren, bevorzugten Ausgestaltung der Erfindung sind die Rippen des Innenrohres und die Wellungen (Innenseite der Rippen) des Außenrohres so zueinander passend ausgebildet, daß sie aufeinander aufklemmbar sind. Das Außenrohr, das bereits deshalb auf dem Innenrohr hält, weil die Breite seines Schlitzes kleiner ist als dessen Durchmesser, ist somit zusätzlich noch mit seinen Wellungen auf den Rippen des Innenrohres aufgeklemmt, so daß eine besonders stramme Verbindung geschaffen ist, welche sich auch beim Verlegen der Schutzrohranordnung längs der Biegungen herum nicht löst. Andererseits kann diese Schutzrohranordnung zum Zwecke von Überprüfungen, Reparaturen und zum Einlegen zusätzlicher Leitungen jederzeit dadurch geöffnet werden, daß man die beiden Schlitzkanten des Außenrohres auseinanderbiegt und das Außenrohr dann vom Innenrohr einfach abzieht. Es wird somit eine dichte Schutzrohranordnung geschaffen, deren Inneres jedoch stets zugänglich bleibt, ohne daß hierzu eine äußere, zusätzlich Dichtung abgenommen und wieder aufgebracht werden müßte, welche etwa von einer Isolierbandumwicklung gebildet sein kann, wie sie bei den eingangs genannten, bekannten, längsgeteilten Schutzrohranordnungen zur besseren Abdichtung und zum besseren Zusammenhalt erforderlich ist.

Ein weiterer Vorteil der komplementären Ausbildung der Rippen des Innenrohres und der Wellungen des Außenrohres liegt darin, daß im Innenren der Schutzanordnung eine nur sehr schmale, überstehende Kante auftritt, welche etwa der Wandstärke des Innenrohres entspricht und somit nicht geeignet ist, als Scheuerstelle zur Schädigung der eingelegten Leitungen zu führen.

Gemäß der Erfindung ist zwischen Innen- und Außenrohr eine Verdrehsicherung angeordnet, etwa in Form von überstehenden Warzen an einem der Rohre und Aussparungen am anderen dieser Rohre; es kann somit die bereits geschlossene Schutzrohranordnung mit eingelegtem Kabelbaum während des Einbaus verdrillt werden, ohne daß sich deshalb an irgendeiner Stelle der Längsschlitz öffnet.

Besonders vorteilhaft ist als Verdrehsicherung zum Beispiel ein einwärts in den Schlitz des Innenrohres eingreifender, am Außenrohr ausgebildeter, leistenartiger Vorsprung, weil sich durch dessen geeignete Höhe eine völlig glatte Innenwand der Anordnung ergeben kann.

Gemäß einer bevorzugten Ausgestaltung der Erfindung ist jedoch am Innenrohr eine Längsleiste ausgebildet, deren Breite vorzugsweise kleiner als die Breite des Schlitzes des Außenrohres in montiertem Zustand oder gleich diesem ist, so daß sich das Innenrohr gegen Verdrehung an den Kanten des Längsschlitzes des Außenrohres abstützt und gleichzeitig bevorzugt die Schutzrohranordnung eine bündige, glatt durchgehende Außenkontur aufweist. Der besondere Vorteil dieser Anordnung liegt darin, daß eine solche Schutzrohranordnung an handelsübliche Verbindungsstücke, Muffen und dergleichen dichtend angeschlossen werden kann, da diese Einrichtungen grundsätzlich für runde Rohr-Außenquerschnitte eingerichtet sind.

Grundsätzlich kann der Längsschlitz im Innenrohr die gleiche Breite aufweisen wie jener im Außenrohr. Gemäß einer bevorzugten Ausgestaltung der Erfindung ist aber der Längsschlitz im Außenrohr breiter als jener im Innenrohr, und zwar um ein solches Maß, daß es bei flüchtigem Zusammenklemmen von Außen- und Innenrohr gewährleistet ist, daß niemals das Außenrohr in den Schlitz des Innenrohres gelangt. Hierdurch werden Montagestörungen und damit gegebenenfalls verbundene Beschädigungen der im Innenrohr eingelegten Leitungen zuverlässig verhindert.

Es hat sich als besonders vorteilhaft herausgestellt, daß die Breite des Längsschlitzes des Innenrohres etwa ein Viertel bis die Hälfte dessen Durchmessers beträgt; hierdurch ist eine Schlitzbreite geschaffen, die das Einlegen von Leitungen bei allenfalls nur leichtem Auseinanderbiegen der Schlitzkanten mühelos und beschädigungsfrei ermöglicht, während andererseits die beiden Schlitzkanten den Querschnitt des Innenrohres in unbelastetem Zustand so weit hintergreifen, daß die in das Innenrohr eingelegten Leitungen während der Montage ohne zusätzliche Halterungen daran gehindert sind, wieder zum Schlitz herauszugelangen.

Für die Breite des Längsschlitzes im Außenrohr genügt es, allenfalls um wenige Millimeter breiter zu sein als die Breite des Längsschlitzes im Innenrohr. Auf diese Weise umgreift das Außenrohr mit den Kanten seines Längsschlitzes das Innenrohr so weit, daß ein zuverlässiger Klemmsitz selbst an engen Knickstellen der Schutzrohranordnung bereits infolge dieser Ausbildung gewährleistet ist.

Wie oben beschrieben, können bei der erfindungsgemäßen Schutzrohranordnung ohne weiteres an beliebigen Stellen Öffnungen für Leitungsabzweigungen gebildet werden. Diese Öffnungen müssen jedoch speziell abgedichtet werden, wie dies allgemein üblich ist.

Gemäß einer weiteren, bevorzugten Ausgestaltung der Erfindung sind spezielle Abzweigungsstücke vorgesehen, die etwa in Form eines T-Stückes aus einem durchgehenden Rohrstutzen und einem von diesem abzweigenden Abzweigungsstutzen gebildet sind. Die Erfindung bezieht sich ausdrücklich auf ein solches Abzweigungsstück allein. Dieses Abzweigungsstück ist erfindungsgemäß in zwei Halbschalen längsgeteilt, und der aus jeweils zwei Hälften zusammengesetzte Rohrstutzen, bevorzugt auch der Abzweigungsstutzen, sind so geformt, daß sie das Innen- und Außenrohr umgreifen.Bervorzugt sind aber am Rohrstutzen und gegebenenfalls auch am Abzweigungsstutzen Rippen oder Wellungen passend zum Innen- und Außenrohr ausgebildet. Es ist somit möglich, die beiden Halbschalen auf das Innen- und Außenrohr aufzuklemmen, wobei gegebenenfalls der Abzweigstutzen seinerseits auf ein Abzweigungs-Innen- und Außenrohr aufklemmbar ist.

Mit Hilfe der Abzweigstücke ist es möglich, auch einen verzweigten Kabelbaum mit der Schutzrohranordnung nahtlos zu bestücken. Der Hauptstrang des Kabelbaums wird durch den beschriebenen Längsschlitz in das zum Beispiel durchgehende Innenrohr eingelegt. Die Zweigleitung wird durch den Schlitz des Innenrohrs herausgeführt. Stücke des Außenrohrs werden in eine Abstand von der Dicke der Kabelabzweigung auf beiden Seiten der Kabelabzweigung auf das Innenrohr geklemmt. Die Schlitze der Außenrohrstücke liegen dabei auf der entgegengesetzten Seite, auf der sich der Längsschlitz des Innenrohres befindet. Die Halbschalen des Abzweigstückes werden auf der Schutzrohranordnung so angeordnet, daß der Abzweigstutzten über den Schlitz des Innenrohrs zu liegen kommt und den Kabelbaumzweig aufnimmt; sie umgreifen somit Innen- und Außenrohr sowie den Kabelabzweig. Im Abzweigstutzten können ebenfalls, zum Schutz der Abzweigleitungen, eine gleiche Anordnung von Innen- und Außenrohr montiert werden, wie für den Hauptstrang des Kabelbaums beschrieben.

Wenn in einer anderen Radialrichtung des genannten Innenrohres eine Abzweigung verlaufen soll, so ist es aber auch möglich, die Schutzrohranordnung aufzutrennen und die beiden Rohrenden mit einem Abstand zueinander anzuordnen, der für die Durchführung der Zweigleitung ausreichend ist. In dieser Position wird der Rohrstutzen auf die beiden zugewandten Enden der Schutzrohranordnung aufgeklemmt, wobei der Abzweigungsstutzen in jene Richtung weist, in welcher die Zweigleitung verlaufen soll.

Es ist aber auch möglich, die oben erwähnten Aussparungen an Innen-und/oder Außenrohr vorzusehen und dann den Abzweigungstutzen entsprechend auszurichten.

Es ist grundsätzlich auch möglich, den Rohrstutzen und/oder Abzweigungsstutzen zu den Rippen des Innen- und Außenrohres komplementär auszubilden, so daß der Rohrstutzen bzw. Abzweigungsstutzen auf das Innen- und Außenrohr aufklemmbar ist.

Bevorzugt umgreifen die Abzweigungsstücke von außen her die gesamte Schutzrohranordnung, wobei zur Erzielung eines formschlüssigen Verbundes im Inneren der Rohr- und/oder Abzweigstutzen Ausbildungen eingeformt sind, welche in die Wellentäler der Schutzrohranordnung eingreifen. Hiervon ist vor allem das Außenrohr betroffen; nur im Bereich des Längsschlitzes des Außenrohres steht gegebenenfalls das Innenrohr in Eingriff mit dem Anschlußstutzen.

Um die beiden Halbschalen zuverlässig zusammenzuhalten, könnte eine Rohrschelle um einen Teil des Abzweigungsstücks herumgelegt werden. Gemäß einer bevorzugten Ausgestaltung der Erfindung ist es aber besonders von Vorteil, daß die beiden Teile des Rohrstutzens durch ein angeformtes Filmscharnier miteinander verbunden sind, welches dann, wenn das Abzweigungsstück an einer Abzweigungsstelle angebracht ist, dafür sorgt, die beiden Hälften des Rohrstutzens an einer Seite miteinander zu verbinden. Es ist dann nur noch erforderlich, an anderer Stelle des Abzweigungsstücks, vorzugsweise am Abzweigungsstutzen, eine Befestigungseinrichtung vorzusehen. Gemäß einer bevorzugten Ausgestaltung der Erfindung ist die Befestigungseinrichtung in Form von Rastausbildungen geschaffen, so daß ohne Werkzeug oder zusätzliche Halterungen das Abzweigungsstück an der Abzweigungsstelle um die den Hauptstrang der Leitungen enthaltende Schutzrohranordnung herumgelegt und zusammengerastet werden kann. Hierbei ist bevorzugt die Raststelle so ausgebildet, daß sie ohne weiteres wieder geöffnet werden kann, so daß in einem späteren Arbeitsgang die Schutzrohranordnung geöffnet und eine weitere Zweigleitung herausgeführt werden kann.

Gemäß weiterer, bevorzugter Ausgestaltungen der Erfindung sind am Abzweigungsstück einerseits und an den Schutzrohranordnungen des Hauptleitungsstranges und/oder des Abzweigungsstranges andererseits Verdrehsicherungen angebracht, die zum jeweiligen Außen- und/oder Innenrohr hin wirksam sind. Soweit der Rohrstutzen auf das Innen- und Außenrohr aufklemmbar ist, dann er bevorzugt eine mit dem Längssteg des Innen- bzw. Außenrohres in Eingriff bringbare, innere Längsnut aufweisen, die den Längssteg des Innenrohres aufnimmt. Es ist möglich, Verbindungsstücke mit unterschiedlicher Winkellage der Längsnut bereitzustellen, für den Fall, daß die Zweigleitung in unterschiedlicher, entsprechender Radialrichtung von der Hauptrichtung abzweigen soll.

Es ist aber auch möglich, bei einer im wesentlichen runden Außenkontur der Schutzrohranordnung die Verdrehsicherung wegzulassen.

Es ist mit Einzelteilen der erfindungsgemäßen Schutzrohranordnung somit möglich, nicht nur vorgefertigte Schutzrohre für bestimmte Kraftfahrzeugtypen zu schaffen, sondern baukastenartig Schutzrohrleitungen mit unter Umständen komplizierten Verzweigungsstellen und engen Knickstellen zusammenzustellen, wobei die Abzweigungsstellen nicht auf jene Stellen beschränkt sind, an welchen vorher entsprechende Ausbildungen angebracht wurden. Andererseits ist es möglich, zum Beispiel bei der Schutzrohranordnung für ein Kraftfahrzeug an jenen Stellen, an welchen gemäß einer Sonderausstattung eine Abzweigung anzubringen ist, bereits das Außenrohr aufzutrennen und einen kurzen, eingesetzten Außenrohrabschnitt vorzusehen, dessen Länge jedoch kleiner ist als die Länge des Abzweigungsstückes, so daß beim Einbau des zur Abzweigung gehörigen Sonderzubehörs bereits an der richtigen Stelle lediglich der genannte, kurze

Außenrohrabschnitt entnommen und das Abzweigungsstück aufgesetzt zu werden braucht.

Es ist somit insgesamt möglich, einen Schutzrohrleitungs-Bausatz für ein Serienfahrzeug zu schaffen, mit einer Rohrleitung, die zum Einbau in einem Fahrzeug mit Grundausstattung eingerichtet ist. In dieser Schutzrohrleitung sind zwischen allen möglichen Abzweigungsstellen lösbare Außenrohrabschnitte vorgesehen; ferner enthält der Bausatz alle jene Abzweigungsstücke und gegebenenfalls Schutzrohranordnungen für Zweigleitungen, welche allen Zubehörausstattungen des Fahrzeugs entsprechen.

Ein Bausatz kann aber auch grundsätzlich baukastenartig eine Zusammenstellung von vorgeschnittenen Längenabschnitten mit Außen- und Innenrohren sowie Abzweigungsstücke aufweisen, womit es möglich ist, bei der Verdrahtung von Sonderfahrzeugen, wie zum Beispiel Kränen und dergleichen, die zugehörigen Schutzrohranordnungen zusammenzustellen.

Die Erfindung bezieht sich auch auf einen Bausatz der beschriebenen Art.

Der Gegenstand der Erfindung wird anhand der beigefügten, schematischen Zeichnungen beispielsweise noch näher beschrieben; in diesen zeigen:
- Figur 1: eine schematische Schrägbilddarstellung der erfindungsgemäßen Schutzrohranordnung,
- Figur 2: eine Schrägbilddarstellung einer anderen Ausführungsform einer erfindungsgemäßen Schutzrohranordnung, in vergrößertem Maßstab,
- Figur 3: den Querschnitt von Außen- und Innenrohr bei Zusammenklemmen dieser Teile für die Ausführungsform der Fig. 2, und
- Figure 4: den Längsschnitt durch eine Anordnung aus erfindungsgemäßen Abzweigungsstücken.

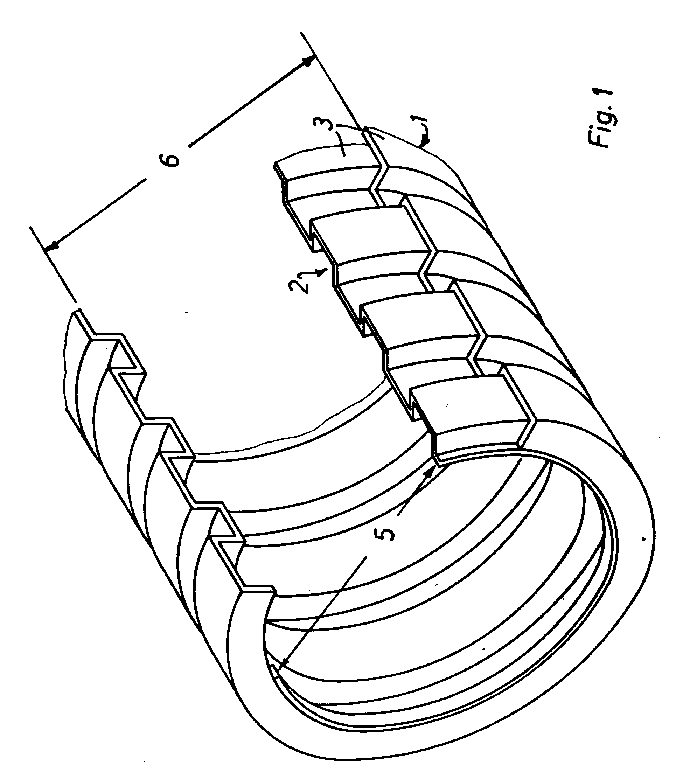

In Fig. 1 ist im Schrägbild eine Schutzrohranordnung gezeigt, mit einem Außenrohr 1 aus Kunststoff. Das Wandmaterial dieses Außenrohres 1 ist zu ringförmigen Wellungen bzw. ringförmigen Stegen 3 geformt, so daß das Wellenrohr insgesamt gegenüber Zusammendrücken steif, aber leicht biegbar ist. Die Stege 3 bzw. Wellungen können grundsätzlich auch wendelförmig verlaufen.

Im Innenren des Außenrohres 1 ist ein Innenrohr 2 angeordnet, dessen Wandstärke im wesentlichen jener des Außenrohres 1 entspricht und dessen Wandmaterial ebenfalls zu ringförmigen Rippen und Wellungen geformt ist, deren Teilung gleich jener des Außenrohres ist. Wie erkennbar, sind die Rippen 3 des Innenrohres 2 so ausgebildet, daß sie genau in einer Wellung des Außenrohres 1 passend sitzen.

Das Außenrohr 1 weist einen Längsschlitz 6 auf, während das Innenrohr 2 einen Längsschlitz 5 aufweist. In Zusammengesetztem Zustand liegen die beiden Längsschlitze 5, 6 an den voneinander abgewandten Längsseiten der Schutzrohranordnung.

Das Material des Innenrohres 2 ist hinlänglich flexibel, so daß vor dem Aufklemmen des Außenrohres 1 der Längsschlitz 5 zwangslos auseinandergebogen werden kann, falls dies zum Einlegen von Leitungen wie zum Beispiel eines Kabelbaums noch nötig sein sollte; an sich ist der Längsschlitz bereits von vornherein breit genug, um das Einlegen dieser Leitungen zu gestatten. Der Längsschlitz 6 des Außenrohres 1 ist deutlich breiter als der Längsschlitz 5 des Innenrohres 2; das Außenrohr 1 ist hinlänglich flexibel, so daß der Längsschlitz 6 so weit auseinandergebogen werden kann, daß das Außenrohr 1 auf das Innenrohr 2 aufgeklemmt werden kann. Hierbei ist wegen der unterschiedlichen Breite der Längsschlitze 5, 6 zuverlässig ausgeschlossen, daß etwa beim Zusammenklemmen das Außenrohr 1 den Längsschlitz 5 des Innenrohres 2 aufbiegt und in dieses hineingelangt.

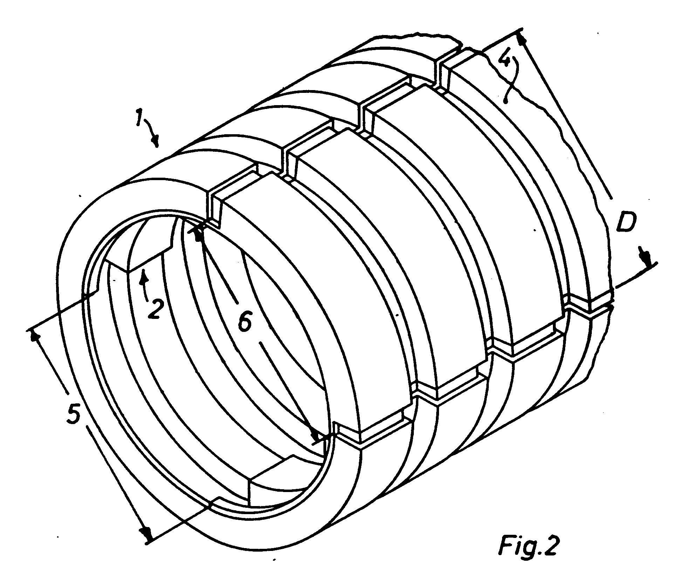

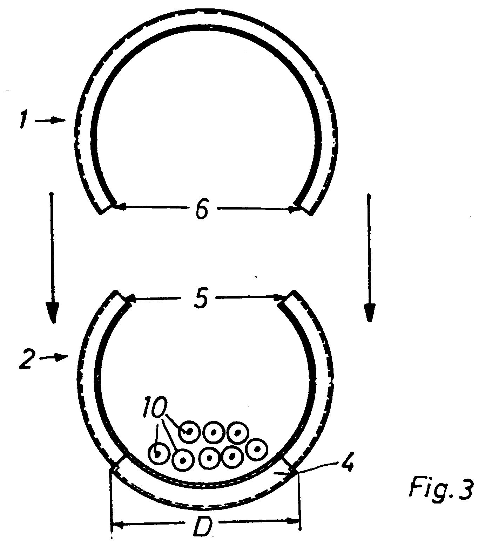

In Fig. 2 und 3 ist eine andere Ausführungsform der Schutzrohranordnung gezeigt; hierbei sind einander entsprechende Elemente mit gleichen Bezugszeichen versehen und nachfolgend nicht näher beschrieben.

Das Innenrohr 2 dieser Ausfürhungsform weist auf dem vom Längsschlitz 5 abgewandten Teil seiner Außenseite eine Längsleiste 4 auf, deren Höhe etwa der Wandstärke des Wandmaterials des Außenrohres 1 entspricht und deren Breite D kleiner ist als jene des Längsschlitzes 6 im Außenrohr 1 oder gleich dieser ist.

Bei der Montage wird zunächst in das Innenrohr 2 der aus Leitungen 10 gebildete Kabelbaum eingelegt, dann werden Innenrohr 2 und Außenrohr 3 in Pfeilrichtung (Fig. 3) zusammengedrückt. Die unterschiedliche Breite der Längsschlitze 5, 6 gewährleistet hierbei den störungsfreien Aufklemmvorgang.

Nach dem Aufklemmen liegen die Längskanten des Längsschlitzes 6 im Außenrohr 1 bündig gegen die Längskanten der Längsleiste 4 des Innenrohres 2 an, so daß insgesamt eine Rohranordnung, mit im wesentlichen durchgehender Außenkontur entsteht, wie sie in Fig. 2 gezeigt ist.

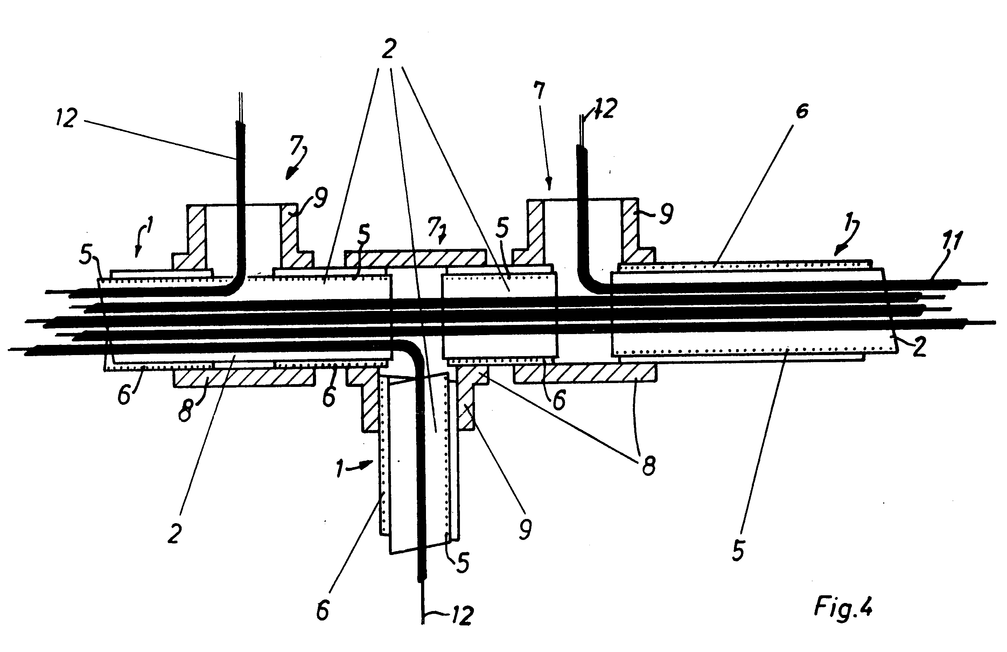

In Fig. 4 ist ein in eine Schutzrohranordnung 1, 2 eingelegter Kabelbaum 11 gezeigt, von welchem drei Zweigleitungen 12 abzweigen.

Hierbei sind das Außenrohr 1, das Innenrohr 2 nur schematisch dargestellt; eine Punktreihe bezeichnet jeweils den Längsschlitz 6 des Außenrohrs 1 bzw. den Längsschlitz 5 des Innenrohrs 2.

An der linken der drei gezeigten Abzweigungen verläuft das Innenrohr 2 durchgehend mit nach oben weisendem Längsschlitz 5. Die Zweigleitung 12 ist in der Zeichnung nach oben durch den Längsschlitz 5 aus dem Inneren des Innenrohrs 2 herausgeführt.

Das Außenrohr 1, dessen Längsschlitz 6 nach unten weist, erstreckt sich nur bis zur Abzweigstelle; jenseits dieser ist ein neues Außenrohr 1 auf das Innenrohr 2 aufgeklemmt.

Ein Abzweigungsstück 7, das als T-Stück ausgebildet ist, weist einen Rohrstutzen 8 auf, der auf die Enden der beiden Außenrohre 1 aufgeklemmt ist und den Abstand zwischen diesen überbrückt. Das Abzweigungsstück 7 weist ferner einen rechtwinklig vom Rohrstutzen 8 abzweigenden Abzweigungsstutzen 9 auf, durch welchen die Zweigleitung 12 hindurchgeführt ist.

Der Abstand zwischen den benachbarten Enden der beiden Außenrohre 1 ist so bemessen, daß die beiden Enden des Rohrstutzens 8 über eine hinlänglich lange Strecke mit den Rohrenden des Außenrohrs 1 in Eingriff stehen, um einen zuverlässigen Halt der Anordnung zu gewährleisten.

Das Abzweigungsstück 7 ist in der Zeichnung der Einfachheit halber als einstückiges Teil dargestellt; tatsächlich ist das Abzweigungsstück 7 jedoch mittig geteilt, so daß es um die Enden der Außenrohre 1 herumgelegt werden kann; die beiden Teile des Abzweigungsstücks 7 werden dann miteinander verrastet.

Die zweite, mittlere Abzweigungsstelle weist eine Zweigleitung 12 auf, die in einer solchen Richtung vom Kabelbaum 11 abzweigt, welche der Lage des Längsschlitzes 5 des Innenrohrs 2 entgegengesetzt ist. Deshalb ist an dieser Stelle das Innenrohr 2 aufgetrennt. Das Außenrohr 1 könnte an dieser Stelle durchgehend verlaufen, da die Zweigleitung 12 durch den Längsschlitz 6 des Außenrohrs 1 hindurchgeführt ist. Man kann aber ebenso gut auch, wie es in der Zeichnung gezeigt ist, ebenfalls das Außenrohr 1 auftrennen.

Das Abzweigungsstück 7 ist auf den beiden Enden der benachbarten Außenrohre 1 aufgeklemmt, wie dies bereits bei der ersten, linken Abzweigungsstelle gezeigt ist; es weist jedoch der Abzweigungsstutzen 9 in der Zeichnung nach unten.

An dieser Stelle soll sich die Zweigleitung 12 noch über eine größere Länge erstrecken, weshalb sie ebenfalls innerhalb einer Schutzrohranordnung verläuft, die aus einem Innenrohr 2 und einem Außenrohr 1 gebildet ist, welches seinerseits unverrutschbar im Abzweigungsstutzen 9 festsitzt.

Eine Abzweigungsstelle kann auch verwendet werden, um die Lage der Schlitze 5, 6 so zu ändern, wie dies für nachfolgende, weitere Abzweigungsstellen besonders zweckmäßig ist. Eine solche Anordnung ist an der dritten, rechten Abzweigungsstelle in Fig. 4 gezeigt. Hier weist der Schlitz 5 des linken Innenrohrs 2 nach oben, während der Schlitz 5 des rechten Innenrohrs 2 nach unten weist.

Obwohl wegen der schematischen Darstellung in der Zeichnung nicht erkennbar, sind Außenrohr 1 und Innenrohr 2 so ausgebildet, wie in den Fig. 1 und 2 gezeigt. Die Innenoberfläche des Rohrstutzens 8 und des Abzweigungsstutzens 9 sind komplementär zur Ausbildung des Außenrohrs 1 ringgewellt, so daß an den Abzweigungsstellen ein formschlüssiger Eingriff zwischen den jeweiligen Außenrohren 1 und dem Abzweigungsstück 7 stattfindet.

Wie in der Zeichnung angedeutet, ist die Wandstärke des Abzweigungstücks 7 verhältnismäßig groß, so daß dieses so steif ist, daß ein ständiger, zuverlässiger Sitz der Außenrohre 1 im jeweiligen Abzweigungsstück 7 gewährleistet ist.

## Patentansprüche

1. Schutzrohranordnung für Leitungen (12) und bevorzugt für Kabelbäume (11) in Kraftfahrzeugen, mit einem ersten Rohr (2) zur Aufnahme der Leitungen (12) oder Kabelbäume (11), das einen Längsschlitz (5) zum Einlegen der Leitungen (12) oder Kabelbäume (11) aufweist, und einem zweiten, längsgeschlitzten, äußeren Rohr (1), das auf das erste, innere Rohr (2) von außen her aufsteckbar ist, wobei der Längsschlitz (5) abdeckbar ist, gekennzeichnet durch die folgenden Merkmale:
a) das Innenrohr (2) und das Außenrohr (1) sind jeweils aus Kunststoff, ringgewellt und flexibel,
b) die Rippen (3) des Innenrohres (2) liegen in den Wellungen des Außenrohres (1), und
c) am Innen- und/oder Außenrohr (2, 1) ist eine Verdrehsicherung (4) angeordnet.

2. Anordnung nach Anspruch 1, dadurch gekennzeichnet, daß die Rippen (3) des Innenrohres (2) mit den Wellungen des Außenrohres (1) verklemmt sind.

3. Anordnung nach Anspruch 1, dadurch gekennzeichnet, daß die Verdrehsicherung als eine Längsleiste (4) am Innenrohr (2) ausgebildet ist, deren Breite (D) kleiner oder gleich jener des Längsschlitzes (6) im Außenrohr (1) ist und in diesen eingreift.

4. Anordnung nach Anspruch 3, dadurch gekennzeichnet, daß das Außenrohr (1) und die längsleiste (4) eine bündig durchgehende Außenkontur bilden.

5. Anordnung nach einem der Ansprüche 1 bis 4, dadurch gekennzeichnet, daß der Längsschlitz (6) im Außenrohr (1) breiter ist als der Längsschlitz (5) im Innenrohr (2).

6. Anordnung nach einem der Ansprüche 1 bis 5, gekenzeichnet durch ein Abzweigungsstück (7) mit einem durchgehenden, gewellten, längsgeteilten Rohrstutzen (8), der auf das Innenrohr (2) und/oder auf das Außenrohr (1) passend aufsetzbar ist, und mit einem längsgeteilten Abzweigungsstutzen (9), dessen beide Hälften jeweils an einem Teil des Rohrstutzens (8) angeformt sind, wobei die so gebildeten beiden Halbschalen um das Innen- und/oder Außenrohr (2, 1) herumlegbar und/oder aneinander befestigbar sind.

7. Anordnung nach Anspruch 6, dadurch gekennzeichnet, daß die beiden Teile des Rohrstutzens (8) durch ein angeformtes Filmscharnier miteinander verbunden sind, und daß die beiden Halbschalen miteinander verrastbar sind.

8. Anordnung nach einem der Ansprüche 6 oder 7, dadurch gekennzeichnet, daß am Rohrstutzen (8) oder am Innen- oder Außenrohr (2, 1) eine Verdrehsicherung angeordnet ist.

9. Anordnung nach einem der Ansprüche 6 bis 8, dadurch gekennzeichnet, daß der Abzweigungsstutzen (9) passend um das Außen- oder Innenrohr (1, 2) herumlegbar ist.

10. Anordnung nach Anspruch 9, gekennzeichnet durch eine Verdrehsicherung zwischen dem Abzweigungsstutzen (9) und dem Außen- oder Innenrohr (1, 2).

11. Bausatz aus zugeschnittenen Längenabschnitten von mindestens einem Außen- und Innenrohr (1, 2) und gegebenenfalls aus mindestens einem Abzweigungsstück (7) nach mindestens einem der Ansprüche 1 bis 10.

## Claims

1. A protective tubing arrangement for conduits (12) and preferably for cable harnesses (11) in motor vehicles, having a first tube (2) for housing the conduits (12) or cable harnesses (11), which comprises a longitudinal slit (5) for the insertion of the conduits (12) or the cable harnesses (11), and having a second, longitudinally slit, outer tube (1), which can be placed on the first, inner tube (2) from outside, whereby the longitudinal slit (5) can be covered,
**characterised by** the following features:
a) the inner tube (2) and the outer tube (1) are made from plastic, have annular corrugations and are flexible,
b) the ribs (3) of the inner tube (2) lie in the corrugations of the outer tube (1), and
c) on the inner and/or outer tube (2, 1) is disposed an anti-torsion device (4).

2. An arrangement according to Claim 1,
**characterised in that** the ribs (3) of the inner tube (2) are clamped to the corrugations of the outer tube (1).

3. An arrangement according to Claim 1,
**characterised in that** the anti-torsion device is constructed as a longitudinal ridge (4) on the inner tube (2), the width (D) of which is less than or equal to that of the longitudinal slit (6) in the outer tube (1) and engages therein.

4. An arrangement according to Claim 3,
**characterised in that** the outer tube (1) and the longitudinal ridge (4) form a flush, continuous outer contour.

5. An arrangement according to one of Claims 1 to 4,
**characterised in that** the longitudinal slit (6) in the outer tube (1) is wider than the longitudinal slit (5) in the inner tube (2).

6. An arrangement according to one of Claims 1 to 5,
**characterised by** a branch piece (7) having a continuous, corrugated, longitudinally divided socket piece (8), which can be mounted on the inner tube (2) and/or on the outer tube (1) in a tightly-fitting manner, and having a longitudinally divided branch socket (9), the two halves of which are integral on a part of the socket piece (8), whereby the two half shells formed in this manner can be laid around the inner and/or outer tube (2, 1) and/or can be attached to one another.

7. An arrangement according to Claim 6,
**characterised in that** the two parts of the socket piece (8) are connected by an integral film hinge, **and in that** the two half shells can be locked together.

8. An arrangement according to one of Claims 6 or 7,
**characterised in that** an anti-torsion device is disposed on the socket piece (8) or on the inner or outer tube (2, 1).

9. An arrangement according to one of Claims 6 to 8,
**characterised in that** the branch socket (9) can be laid in a tightly-fitting manner around the outer or inner tube (l, 2).

10. An arrangement according to Claim 9,
**characterised by** an anti-torsion device between the branch socket (9) and the outer or inner tube (1, 2).

11. An assembly consisting of cut-to-size longitudinal sections of at least one outer and inner tube (1, 2) and if required of at least one branch piece (7) according to at least one of Claims 1 to 10.

## Revendications

1. Système de gainage pour conduites (12) et, de préférence, pour faisceaux de câbles (11) montés dans des véhicules automobiles, comprenant une première gaine (2) destinée à recevoir les conduites (12) ou câbles en faisceaux (11) et présentant une fente longitudinale (5) en vue de l'insertion des conduites (12) ou faisceaux de câbles (11), et une seconde gaine extérieure (1) fendue selon la longueur, qui peut être engagée de l'extérieur sur la première gaine, intérieure (2), ladite fente longitudinale (5) pouvant être recouverte, système de gainage caractérisé par les éléments caractéristiques suivants :
a) la gaine intérieure (2) et la gaine extérieure (1) sont chacune en plastique, annelée et flexible,
b) les cannelures (3) de la gaine intérieure (2) se logent dans les ondulations de la gaine extérieure (1), et
c) un blocage en rotation (4) est prévu sur les gaines intérieure et/ou extérieure (2, 1).

2. Système suivant la revendication 1, caractérisé en ce que les cannelures (3) de la gaine intérieure (2) sont coincées par les ondulations de la gaine extérieure (1).

3. Système suivant la revendication 1, caractérisé en ce que le blocage en rotation est matérialisé par une nervure ou moulure longitudinale (4) de la gaine intérieure (2), dont la largeur (D) est inférieure ou égale à celle de la fente longitudinale (6) de la gaine extérieure (1), et s'engage dans cette dernière.

4. Système suivant la revendication 3, caractérisé en ce que la gaine extérieure (1) et la moulure longitudinale (4) donnent forme à un contour régulier et affleuré.

5. Système suivant l'une quelconque des revendications 1 à 4, caractérisé en ce que la fente longitudinale (6) de la gaine extérieure (1) est plus large que la fente longitudinale (5) de la gaine intérieure (2).

6. Système suivant l'une quelconque des revendications 1 à 5, caractérisé par un branchement (7) comportant un raccord tubulaire (8) continu, annelé et fendu sur sa longueur, qui se pose en s'adaptant sur la gaine intérieure (2) et/ou sur la gaine extérieure (1), et un raccord d'embranchement (9) fendu sur sa longueur, dont les deux moitiés sont préformées, respectivement, sur une partie du raccord tubulaire (8), les deux demi-coquilles pouvant être rabattues ou fixées l'une à l'autre autour de la gaine intérieure et/ou extérieure (2, 1).

7. Système suivant la revendication 6, caractérisé en ce que les deux parties du raccord tubulaire (8) sont reliées par une articulation très mince et en ce que les deux demi-coquilles s'enclenchent.

8. Système suivant l'une quelconque des revendications 6 ou 7, caractérisé en ce qu'un blocage en rotation est prévu sur le raccord tubulaire (8) ou sur la gaine intérieure ou extérieure (2, 1).

9. Système suivant l'une quelconque des revendications 6 à 8, caractérisé en ce que le raccord d'embranchement (9) peut être rabattu en s'adaptant autour de la gaine extérieure ou intérieure (1, 2).

10. Système suivant la revendication 9, caractérisé par un blocage en rotation entre le raccord d'embranchement (9) et la gaine extérieure ou intérieure (1, 2).

11. Jeu de tronçons individuels coupés à dimension, composé d'au moins une gaine extérieure et intérieure (1, 2), et éventuellement d'au moins un branchement (7) conformes à l'une quelconque des revendications 1 à 10.
